# EUROPÄISCHE PATENTSCHRIFT

(11) **EP 3 766 160 B1**
(45) Veröffentlichungstag und Bekanntmachung des Hinweises auf die Patenterteilung: **18.11.2026**
(21) Anmeldenummer: 18723779.7
(22) Anmeldetag: 03.05.2018
(51) Int. Cl.: F03D 9/19

(54) **WASSERSTOFFERZEUGUNGSSYSTEM**
HYDROGEN PRODUCTION SYSTEM
SYSTÈME DE GÉNÉRATION D'HYDROGÈNE

(43) Veröffentlichungstag der Anmeldung: 20.01.2021
(73) Patentinhaber: Siemens Energy Global GmbH & Co. KG, 81739 München (DE)
(72) Erfinder: BROY, Alexander, 90768 Fürth (DE); GIERING, Gerald Franz, 90562 Kalchreuth (DE); RENTSCHLER, Alexander, 64625 Bensheim (DE)
(86) Internationale Anmeldenummer: PCT/EP2018/061376
(87) Internationale Veröffentlichungsnummer: WO 2019/210961

(56) Entgegenhaltungen:
- EP-A2- 3 048 188
- WO-A1-2006/030168
- WO-A1-2017/151035
- GB-A- 2 263 734
- KR-A- 20120 038 062
- US-A1- 2007 138 021
- US-A1- 2008 047 502

## Beschreibung

Die Erfindung betrifft ein Wasserstofferzeugungssystem.

Die Erzeugung von Wasserstoffgas erfolgt heute in den meisten Fällen entweder mit Hilfe der Dampfreformierung von Erdgas oder in großtechnischen Elektrolyseanlagen mit Hilfe von elektrischem Strom aus dem Stromversorgungsnetz. Um Strom aus verschiedensten Energiequellen, beispielsweise erneuerbaren Energiequellen, zu nutzen, muss der Strom zunächst ins Stromversorgungsnetz eingespeist, transportiert und wieder entnommen werden. Dies sorgt für Verluste durch die Stromumwandlung nach der Erzeugung und Einspeisung, dem Transport in den nachgeschalteten Stromversorgungsnetzelementen und durch Übertragungsverluste durch die zu überbrückenden Distanzen. Auch bei der Entnahme aus dem Stromversorgungsnetz und der erneuten Umwandlung auf eine geeignete Stromstärke und Spannung für die Elektrolyse kommt es zu Leistungsverlusten.

Aus der internationalen Patentanmeldung WO 2017/151035 A1 ist ein System zur Anreicherung von Sauerstoff in einem Gewässer bekannt. Dabei ist auf einem Wasserfahrzeug eine Windkraftanlage und eine Elektrolyseeinrichtung installiert. Der bei der Elektrolyse entstehende Sauerstoff wird in das Gewässer eingeleitet; der entstehende Wasserstoff wird in einem Tank gespeichert.

Die europäische Patentanmeldung EP 3 048 188 A2 offenbart eine Anlage zur Elektrolyse von Wasser, die von einer Windkraftanlage gespeist wird. Wasserstoff wir dabei als Energiespeichermedium genutzt, um unerwünschte Schwankungen in der Energieversorgung zu dämpfen.

Aus den Patentanmeldungen US 2008/047502 A1 und WO 2006/030168 A1 sind Verfahren bekannt, bei denen eine Windkraftanlage eine Elektrolyseeinrichtung speist.

Die Schrift US 2007/138021 A1 offenbart ein Schiff, welches mit einer Windkraftanlage und einer Elektrolyseeinrichtung ausgerüstet ist. Der erzeugte Wasserstoff wird mit Helikoptern oder Transportschiffen abgeholt. Ein solches Schiff wird auch in der Schrift KR 2012 0038062 A offenbart.

Die Schrift GB 2 263 734 A offenbart eine Windfarm mit Windkraftanlagen zur Erzeugung von elektrischer Energie. Um die Abgabe von elektrischer Energie gleichmäßiger zu gestalten, kann ein Teil der erzeugten elektrischen Energie zur Elektrolyse von Wasser verwendet werden, wobei der entstehende Wasserstoff gespeichert werden kann.

Aktuell generieren Windenergieanlagen an Land oder auf See elektrische Leistung, welche meist mit Hilfe eines Umrichters von einer elektrischen Last direkt genutzt wird, entweder in einem abgeschlossenen System (Inselnetz) oder indirekt über die Einspeisung in ein Stromversorgungsnetz. Es erfolgt bei Bedarf eine teilweise Zwischenspeicherung der Energie in Stromspeichern entweder um die Abgabe der elektrischen Leistung aus der Windenergie zu vergleichsmäßigen oder Nebensysteme zu versorgen, dies erfolgt direkt an der Windenergieanlage oder gesammelt für einen Verbund von Windenergieanlagen. Gleiches gibt es für die Deckung des Eigenbedarfs der einzelnen Windturbinen, wobei die entsprechenden Komponenten jedoch dann in die Windturbine integriert sein können.

Die Aufgabe besteht darin, die Erzeugung von Wasserstoff effizienter zu gestalten.

Erfindungsgemäß wird ein Wasserstofferzeugungssystem gemäss Anspruch 1 zur Verfügung gestellt umfassend:
- mindestens eine Elektrolyseeinrichtung, zur Erzeugung von Wasserstoff durch Elektrolyse, vorzugsweise aus Wasser,
- mindestens eine Windenergieanlage umfassend einen Generator zur Erzeugung von elektrischer Leistung und deren lokaler Bereitstellung an die mindestens eine, vorzugsweise in die Windenergieanlage integrierte, Elektrolyseeinrichtung,
- mindestens ein der Elektrolyseeinrichtung nachgelagertes Kompressorsystem zur Verdichtung des erzeugten Wasserstoffs.

Dies hat den Vorteil, dass mehrere verlustbehaftete Stromumwandlungs- und Transportschritte zwischen der Erzeugung von elektrischer Leistung und der Verwendung der elektrischen Leistung zur Erzeugung von Wasserstoff entfallen können. Gleichzeitig ist es nicht mehr nötig, die von der mindestens einen Windenergieanlage produzierte elektrische Leistung ganz oder teilweise in das Stromversorgungsnetz einzuspeisen. Vielmehr kann die komplette erzeugte elektrische Leistung unter Verwendung von Wasserstoffgas als Energieträger abtransportiert und/oder gespeichert werden oder die erzeugte elektrische Leistung entweder auf einem konstanten (bzw. regelbaren) Niveau eingespeist werden (was die Stromversorgungsnetze entlastet) und die "Überproduktion" in Form von Wasserstoffgas gespeichert werden.

Die mindestens eine Elektrolyseeinrichtung generiert Wasserstoff und Sauerstoff, wobei ersterer durch das Kompressorsystem auf einen Druck oberhalb des Umgebungsdrucks gebracht wird. Das Wasserstoffgas kann dann lokal gelagert und/oder abtransportiert werden.

Der Vorteil dieser lokalen Wasserstoffgas-Produktion am Ort der Energieerzeugung ist die volle Integration der Wasserstoffproduktion in die Windenergieanlage(n). Es ergeben sich massive Einsparungen was das leistungselektronische Equipment, Transformatoren, Schaltanlagen und Kabel angeht. Statt teuren Wechselstromkabeln können vielfach günstige Gas-Pipelines aus geeignetem Material (Metalle oder Kunststoffrohre mit Metallinliner) verlegt werden.

Der Begriff Generator ist hier weit auszulegen und kann verschiedene Typen von Generatoren beschreiben, auf die in der Folge noch eingegangen wird. Das Wasserstofferzeugungssystem kann auch mehrere Generatoren des gleichen oder unterschiedlichen Typs umfassen und/oder Generatoren können in die Struktur der Windenergieanlage(n) integriert oder (räumlich) außerhalb der Windenergieanlage(n) angeordnet sein.

In einer bevorzugten Ausführungsform ist zwischen dem Generator und je einer Elektrolyseeinrichtung ein Leistungskonditionierer angeordnet, um den vom Generator bereitgestellten Wechselstrom in Gleichstrom einer geeigneten Stromstärke und Spannung für die Elektrolyse umzuwandeln. Das Wasserstofferzeugungssystem wandelt die elektrische Leistung, welche der Generator erzeugt mit Hilfe eines oder mehreren parallel betriebenen, geeigneten Leistungskonditionierern in Gleichstrom, welcher direkt einer oder mehreren Elektrolyseeinrichtungen zugeführt wird. Unter "direkt" ist hier das Vorhandensein von möglichst wenigen Komponenten zwischen den Leistungskonditionierern und den Elektrolyseeinrichtungen zu verstehen, also insbesondere keine Einspeisung des Stroms in ein Stromversorgungsnetz. Einfache (und gegebenenfalls zum Betrieb notwendige) Komponenten sind jedoch nicht ausgeschlossen. Damit werden die Umwandlungsschritte und damit die Verluste auf ein Minimum reduziert.

In einer bevorzugten Ausführungsform umfasst das Wasserstofferzeugungssystem einen fremderregten Synchrongenerator und/oder einen permanent erregten Synchrongenerator und/oder einen fremderregten Gleichstromgenerator. Das Wasserstofferzeugungssystem kann dann (gegebenenfalls statt der Leistungskonditionierer) einen mit dem entsprechenden Generator verbundenen regelbaren Feldstromsteller umfassen.

In einer Ausführungsform ist der mindestens eine Leistungskonditionierer ein aktiver oder passiver Gleichrichter. Somit lässt sich die elektrische Leistung geeignet für die Elektrolyseeinrichtung umwandeln.

In einer bevorzugten Ausführungsform ist der Leistungskonditionierer ein aktiver Gleichrichter umfassend mindestens einen schaltbaren Leistungshalbleiter, insbesondere einen Thyristor. Vorzugsweise ist der mindestens eine Leistungskonditionierer ein einfacher Gleichrichter umfassend mindestens einen schaltbaren Leistungshalbleiter, wie vorteilhafterweise einen Thyristor.

In einer bevorzugten Ausführungsform ist der Leistungskonditionierer ein passiver Gleichrichter umfassend eine Kombination aus Dioden und/oder einem regelbaren Gleichstromsteller. Ein oder mehrere prozesstechnisch parallel betriebene Elektrolysesysteme werden dann direkt aus dem Generator mit Hilfe je eines solchen (aktiven oder passiven) Leistungskonditionierers betrieben. Es besteht keine Notwendigkeit für die Verwendung von Vollumrichtern (back-to-back). Alternativ zur Thyristor-Technologie kann der Leistungskonditionierer also auch eine Kombination von Dioden und einem Gleichstromsteller umfassen (Step Up Step Down).

Das Wasserstofferzeugungssystem umfasst mindestens einen lokalen Druckspeicher für die lokale Lagerung von produziertem Wasserstoffgas. Der Druckspeicher ist innerhalb der Struktur der Windenergieanlage angeordnet. Erfindungsgemäß ist der Druckspeicher in der Gondel der Windenergieanlage angeordnet. Es können aber auch zusätzlich einer oder mehrere zentrale Druckspeicher für mehrere Windenergieanlagen des Systems verwendet werden.

Es ist bevorzugt, dass das Wasserstofferzeugungssystem weiterhin einen Pipeline-Anschluss zum Abtransport von produziertem Wasserstoffgas umfasst. In dieser Ausführungsform werden keine Transformatoren oder netzseitige Schaltanlagen benötigt, da die produzierte elektrische Energie als chemische Energie im Wasserstoffgas gespeichert und über die Pipeline abtransportiert werden kann. Das Wasserstofferzeugungssystem benötigt also keinen Stromnetzanschluss mehr. In der Gesamtbetrachtung ist auch keine kostspielige Kabelanbindung notwendig. Das Wasserstoffgas kann in ein Pipelinesystem zur weiteren Verwendung z. B. Methanisierung eingeleitet werden.

Die Pipeline muss keine reine Wasserstoffpipeline sein, sondern es kann auch eine Beimischung in eine geeignete Gaspipeline (z. B. Erdgas) erfolgen. Der gesamte Wirkungsgrad Windenergie bis zum Wasserstoff-Point-of-Sale wird gegenüber einer Wasserstoffproduktion mit elektrischer Energie aus dem Stromversorgungsnetz erhöht und das elektrische Übertragungsnetz wird nicht weiter belastet. Alternativ oder zusätzlich kann aber auch ein Anschluss an das Stromnetz vorhanden sein, wenn beispielsweise nur ein Teil der produzierten elektrischen Energie zur Wasserstoffproduktion verwendet wird. Gleichsam kann, falls beispielsweise eine Brennstoffzelle vorhanden ist, das Wasserstofferzeugungssystem eine konstante und/oder regelbare Energieabgabe an das Stromversorgungsnetz (unabhängig von der momentanen Windstärke) gewährleisten und belastet das Stromversorgungsnetz also im Gegensatz zu vielen anderen erneuerbaren Energiesystemen nicht.

In einer weiteren bevorzugten Ausführungsform umfasst das Wasserstofferzeugungssystem ein Tankungssystem, über das Wasserstoffgas-Transporter und/oder Wasserstoffgas-Verbraucher produziertes Wasserstoffgas tanken können. Ein Wasserstoffgas-Transporter kann dabei beispielsweise ein Tankschiff oder ein Tanklaster sein. Ein Wasserstoffgas-Verbraucher kann beispielsweise ein Brennstoffzellenfahrzeug/Kraftfahrzeug mit Wasserstoff-Verbrennungsmotor sein. Der produzierte Wasserstoff kann beispielsweise direkt an dem Wasserstofferzeugungssystem bzw. einer Windenergieanlage verkauft werden (zum Beispiel offshore: an Schiffe; onshore: an Brennstoffzellenfahrzeuge). Das Wasserstofferzeugungssystem kann also beispielsweise auch eine Anlegestelle mit Tankanschlüssen für Tankschiffe und/oder eine Tankstelle für Kraftfahrzeuge umfassen.

In einer bevorzugten Ausführungsform umfasst das Wasserstofferzeugungssystem eine Brennstoffzelle zur Erzeugung von elektrischer Energie für eine Energie-Nebenversorgung des Wasserstofferzeugungssystems unter Verwendung von lokal produziertem Wasserstoff. Damit kann auf eine externe Stromversorgung verzichtet werden. Weiterhin ist es auch möglich, die Brennstoffzelle zur Vergleichsmäßigung der an ein Stromversorgungsnetz abgegebenen Energie des Wasserstofferzeugungssystems und seiner Windenergieanlagen zu verwenden. So kann die Brennstoffzelle beispielsweise hochgefahren werden, wenn gerade Windflaute herrscht und so die Variation der abgegebenen elektrischen Energie der verbundenen Windenergieanlagen reduziert wird. Das Wasserstofferzeugungssystem dient dann als Ergänzung zu Pumpspeicherkraftwerken zur Stabilisierung der Stromversorgungsnetze.

In einer bevorzugten Ausführungsform umfasst das Wasserstofferzeugungssystem eine Energie-Nebenversorgung, welche im Betrieb seine Energie aus dem Generator mit Hilfe eines Umrichters bezieht. Diese Ausführungsform kann alternativ oder zusätzlich zur vorherigen Ausführungsform vorgesehen sein.

In einer bevorzugten Ausführungsform umfasst das Wasserstofferzeugungssystem eine an die mindestens eine Elektrolyseeinrichtung angeschlossene Wasseraufbereitungseinrichtung zur Bereitstellung von Wasser für die mindestens eine Elektrolyseeinrichtung. Diese Ausführungsform macht das Wasserstofferzeugungssystem unabhängiger, da das für die Elektrolyse aufbereitete reine Wasser nicht direkt angeliefert und gelagert werden muss.

In einer bevorzugten Ausführungsform ist mindestens eine Windenergieanlage eine Offshore-Windenergieanlage. Diese Ausführungsform hat enorme Vorteile für die Installationskosten von Offshore-Windenergieanlagen und -parks. So kann auf kostspielige Stromleitungen zum Festland verzichtet werden. Weiterhin können die Transportverluste für elektrische Energie zum Festland vermieden werden. Es kann auch ein Zwischenschritt erfolgen, in dem man z. B. in einem Windpark ein Inselnetz betreibt, welches über eine oder mehrere zentral aufgestellte Elektrolyseeinrichtungen verfügt und dort die elektrische Leistung umgewandelt wird. Es wird dann kein Netzanschluss zum Leistungsexport benötigt, sondern nur eine Gaspipeline und/oder ein Tankungssystem für Transportschiffe. So könnte das Wasserstofferzeugungssystem auch in bestehende Offshore-Windparks integriert werden.

In einer bevorzugten Ausführungsform weist die mindestens eine, vorzugsweise in die Windenergieanlage integrierte, Elektrolyseeinrichtung eine Betriebstemperatur geringer als 350 °C auf.

In einer bevorzugten Ausführungsform befinden sich die lokalen Druckspeicher innerhalb der Struktur der Windenergieanlage. Diese Ausführungsform ist platzsparend und erhöht die Sicherheit des Wasserstofferzeugungssystems. Es können pro Windenergieanlage ein oder mehrere integrierte lokale Druckspeicher vorgesehen sein oder nur in einen Teil oder in eine der Windenergieanlagen lokale Druckspeicher integriert sein.

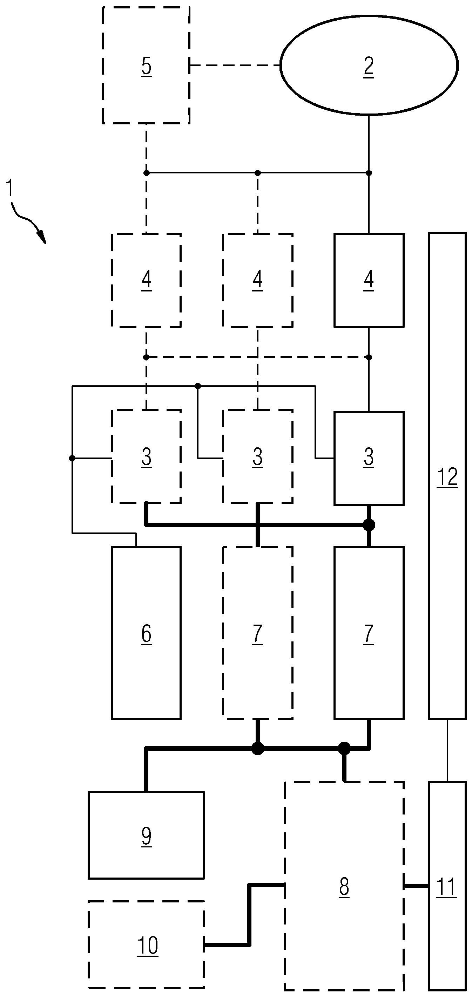

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden. Es zeigt:
- die Figur: eine schematische Darstellung eines erfindungsgemäßen Wasserstofferzeugungssystems.

In der Figur ist eine Ausführungsform eines erfindungsgemäßen Wasserstofferzeugungssystems 1 gezeigt. Das Wasserstofferzeugungssystem 1 umfasst eine oder mehrere Windenergieanlagen 2, umfassend einen Generator zur Erzeugung von elektrischer Leistung und deren lokaler Bereitstellung an die mindestens eine (hier drei) Elektrolyseeinrichtung(en) 3.

Die Elektrolyseeinrichtungen 3 sind zur Erzeugung von Wasserstoff durch Elektrolyse, vorzugsweise aus (z. B. aufbereitetem) Wasser, eingerichtet.

Zwischen dem Generator und je einer Elektrolyseeinrichtung 3 ist ein Leistungskonditionierer 4 angeordnet, um den vom Generator bereitgestellten Wechselstrom in Gleichstrom einer geeigneten Stromstärke und Spannung für die Elektrolyse umzuwandeln. Die Leistungskonditionierer 4 können einfache Gleichrichter, beispielsweise unter Verwendung von Thyristor-Technologie sein. Das Wasserstofferzeugungssystem 1 kann auch einen mit dem Generator und den Leistungskonditionierern 4 verbundenen Feldstromsteller 5 umfassen.

An die Elektrolyseeinrichtungen 3 ist eine Wasseraufbereitungseinrichtung 6 zur Bereitstellung von Wasser für die Elektrolyseeinrichtungen 3 angeschlossen.

Ein oder mehrere (hier zwei) den Elektrolyseeinrichtungen 3 nachgelagerte Kompressorsysteme 7 sind zur Verdichtung des erzeugten Wasserstoffs vorgesehen. Das Wasserstofferzeugungssystem 1 umfasst außerdem einen lokalen Druckspeicher 8 für die lokale Lagerung von produziertem Wasserstoffgas und einen Pipeline-Anschluss 9 zum Abtransport von produziertem Wasserstoffgas. Es kann aber auch nur eine von beiden Komponenten vorhanden sein. Das Wasserstofferzeugungssystem kann auch einen Anschluss an ein externes Stromversorgungsnetz umfassen, um einen Teil der produzierten elektrischen Leistung abzugeben.

Das Wasserstofferzeugungssystem 1 umfasst weiterhin ein Tankungssystem 10 über das Wasserstoffgas-Transporter und/oder Wasserstoffgas-Verbraucher produziertes Wasserstoffgas tanken können. Das Tankungssystem 10 kann beispielweise alternativ oder zusätzlich zu einem Pipeline-Anschluss 9 vorgesehen sein, wenn keine Einspeisung in ein Pipeline-Netz gewünscht ist, oder keine geeignete Pipeline zur Verfügung steht. Der produzierte Wasserstoff kann beispielsweise direkt an dem Wasserstofferzeugungssystem 1 bzw. der Windenergieanlage 2 verkauft werden, zum Beispiel an Schiffe bei einem Offshore-System oder an Brennstoffzellenfahrzeuge bei einem Onshore-System. Das Wasserstofferzeugungssystem 1 kann also beispielsweise auch eine Anlegestelle mit Tankanschlüssen für Tankschiffe oder eine Tankstelle für Kraftfahrzeuge umfassen. Das Wasserstofferzeugungssystem 1 umfasst weiterhin eine Brennstoffzelle 11 zur Erzeugung von elektrischer Energie für eine Energie-Nebenversorgung 12 des Wasserstofferzeugungssystems 1 unter Verwendung von lokal produziertem Wasserstoff. Es ist auch möglich die Brennstoffzelle 11 zur Vergleichsmäßigung der an ein Stromversorgungsnetz abgegebenen Energie des Wasserstofferzeugungssystems 1 und seiner Windenergieanlagen 2 zu verwenden. So kann die Brennstoffzelle 11 beispielsweise hochgefahren werden, wenn gerade Windflaute und kaum elektrische Energie durch die Windenergieanlagen 2 produziert wird. So kann die Variation der abgegebenen elektrischen Energie der verbundenen Windenergieanlagen 2 reduziert werden. Das Wasserstofferzeugungssystem 1 dient dann auch als Ergänzung zu Pumpspeicherkraftwerken zur Stabilisierung der Stromversorgungsnetze.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, wobei der Schutzumfang durch die Ansprüche definiert ist.

### Bezugszeichenliste

- 1: Wasserstofferzeugungssystem
- 2: Windenergieanlage
- 3: Elektrolyseeinrichtung
- 4: Leistungskonditionierer
- 5: Feldstromsteller
- 6: Wasseraufbereitungseinrichtung
- 7: Kompressorsystem
- 8: lokaler Druckspeicher
- 9: Pipeline-Anschluss
- 10: Tankungssystem
- 11: Brennstoffzelle
- 12: Energie-Nebenversorgung

## Patentansprüche

1. Wasserstofferzeugungssystem (1) umfassend:
- mindestens eine Elektrolyseeinrichtung (3), zur Erzeugung von Wasserstoff durch Elektrolyse, vorzugsweise aus Wasser,
- mindestens eine Windenergieanlage (2) umfassend einen Generator zur Erzeugung von elektrischer Leistung und deren lokaler Bereitstellung an die mindestens eine Elektrolyseeinrichtung (3),
- mindestens ein der Elektrolyseeinrichtung (3) nachgelagertes Kompressorsystem (7) zur Verdichtung des erzeugten Wasserstoffs,
- mindestens einen lokalen Druckspeicher (8) für die lokale Lagerung von produziertem Wasserstoffgas, **dadurch gekennzeichnet, dass**
der Druckspeicher in einer Gondel der Windenergieanlage angeordnet ist.

2. Wasserstofferzeugungssystem (1) nach Anspruch 1, wobei zwischen dem Generator und je einer Elektrolyseeinrichtung (3) ein Leistungskonditionierer (4) angeordnet ist, um den vom Generator bereitgestellten Wechselstrom in Gleichstrom einer geeigneten Stromstärke und Spannung für die Elektrolyse umzuwandeln.

3. Wasserstofferzeugungssystem (1) nach Anspruch 1 oder 2, wobei das Wasserstofferzeugungssystem (1) einen fremderregten Synchrongenerator und/oder einen permanent erregten Synchrongenerator und/oder einen fremderregten Gleichstromgenerator umfasst.

4. Wasserstofferzeugungssystem (1) nach Anspruch 2 oder 3, wobei der mindestens eine Leistungskonditionierer (4) ein aktiver oder passiver Gleichrichter ist.

5. Wasserstofferzeugungssystem (1) nach Anspruch 4, wobei der Leistungskonditionierer (4) ein aktiver Gleichrichter ist umfassend mindestens einen schaltbaren Leistungshalbleiter, insbesondere einen Thyristor.

6. Wasserstofferzeugungssystem (1) nach Anspruch 4, wobei der Leistungskonditionierer (4) ein passiver Gleichrichter ist umfassend eine Kombination aus Dioden und/oder einem regelbaren Gleichstromsteller.

7. Wasserstofferzeugungssystem (1) nach einem der vorstehenden Ansprüche, weiterhin umfassend einen Pipeline-Anschluss (9) zum Abtransport von produziertem Wasserstoffgas.

8. Wasserstofferzeugungssystem (1) nach einem der vorstehenden Ansprüche, weiterhin umfassend ein Tankungssystem (10), über das Wasserstoffgas-Transporter und/oder Wasserstoffgas-Verbraucher produziertes Wasserstoffgas tanken können.

9. Wasserstofferzeugungssystem (1) nach einem der vorstehenden Ansprüche, weiterhin umfassend eine Brennstoffzelle (11) zur Erzeugung von elektrischer Energie für eine Energie-Nebenversorgung (12) des Wasserstofferzeugungssystems (1) unter Verwendung von lokal produziertem Wasserstoff.

10. Wasserstofferzeugungssystem (1) nach einem der vorstehenden Ansprüche, weiterhin umfassend eine Energie-Nebenversorgung (12), welche im Betrieb seine Energie aus dem Generator mit Hilfe eines Umrichters bezieht.

11. Wasserstofferzeugungssystem (1) nach einem der vorstehenden Ansprüche, weiterhin umfassend eine an die mindestens eine Elektrolyseeinrichtung (3) angeschlossene Wasseraufbereitungseinrichtung (6) zur Bereitstellung von Wasser für die mindestens eine Elektrolyseeinrichtung (3).

12. Wasserstofferzeugungssystem (1) nach einem der vorstehenden Ansprüche, wobei mindestens eine Windenergieanlage (2) eine Offshore-Windenergieanlage ist.

13. Wasserstofferzeugungssystem (1) nach einem der vorstehenden Ansprüche, **dadurch gekennzeichnet, dass** die mindestens eine, vorzugsweise in die Windenergieanlage integrierte, Elektrolyseeinrichtung (3) eine Betriebstemperatur geringer als 350 °C aufweist.

## Claims

1. A hydrogen production system (1) comprising:
- at least one electrolysis device (3) for producing hydrogen by electrolysis, preferably from water,
- at least one wind turbine (2) comprising a generator for producing electrical power and providing it locally to the at least one electrolysis device (3),
- at least one compressor system (7) downstream of the electrolysis device (3) for compressing the produced hydrogen,
- at least one local pressure accumulator (8) for the local storage of generated hydrogen gas, **characterized in that** the pressure accumulator is arranged in a nacelle of the wind turbine.

2. The hydrogen production system (1) according to claim 1, wherein a power conditioner (4) is arranged between the generator and each electrolysis device (3) to convert the alternating current provided by the generator into direct current of suitable amperage and voltage for the electrolysis.

3. The hydrogen production system (1) according to claim 1 or 2, wherein the hydrogen production system (1) comprises a separately excited synchronous generator and/or a permanently excited synchronous generator and/or a separately excited DC generator.

4. The hydrogen production system (1) according to claim 2 or 3, wherein the at least one power conditioner (4) is an active or passive rectifier.

5. The hydrogen production system (1) according to claim 4, wherein the power conditioner (4) is an active rectifier comprising at least one switchable power semiconductor, in particular a thyristor.

6. The hydrogen production system (1) according to claim 4, wherein the power conditioner (4) is a passive rectifier comprising a combination of diodes and/or a variable DC chopper.

7. The hydrogen production system (1) according to any one of the preceding claims, further comprising a pipeline port (9) for removal of generated hydrogen gas.

8. The hydrogen production system (1) according to any one of the preceding claims, further comprising a tank system (10) via which hydrogen gas transporters and/or hydrogen gas consumers can fill up on generated hydrogen gas.

9. The hydrogen production system (1) according to any one of the preceding claims, further comprising a fuel cell (11) for producing electrical energy for an auxiliary energy supply (12) of the hydrogen production system (1) using locally generated hydrogen.

10. The hydrogen production system (1) according to any one of the preceding claims, further comprising an auxiliary energy supply (12) which, during operation, draws its energy from the generator with the aid of a converter.

11. The hydrogen production system (1) according to any one of the preceding claims, further comprising a water treatment device (6) connected to the at least one electrolysis device (3) for providing water for the at least one electrolysis device (3).

12. The hydrogen production system (1) according to any one of the preceding claims, wherein at least one wind turbine (2) is an offshore wind turbine.

13. The hydrogen production system (1) according to any one of the preceding claims, **characterised in that** the at least one electrolysis device (3), preferably integrated with the wind turbine, has an operating temperature of less than 350°C.

## Revendications

1. Système de génération d'hydrogène (1) comprenant :
- au moins une installation d'électrolyse (3), pour générer de l'hydrogène par électrolyse, de préférence à partir d'eau,
- au moins une éolienne (2) comprenant un générateur pour générer une puissance électrique et la fournir localement à ladite au moins une installation d'électrolyse (3),
- au moins un système de compresseur (7) disposé en aval de l'installation d'électrolyse (3) pour compresser l'hydrogène généré,
- au moins un accumulateur de pression local (8) pour stocker localement le gaz hydrogène produit, **caractérisé en ce que** l'accumulateur de pression est disposé dans une nacelle de l'éolienne.

2. Système de génération d'hydrogène (1) selon la revendication 1, dans lequel un conditionneur de puissance (4) est disposé entre le générateur et chaque installation d'électrolyse (3) afin de convertir le courant alternatif fourni par le générateur en un courant continu présentant une intensité de courant et une tension appropriées pour l'électrolyse.

3. Système de génération d'hydrogène (1) selon la revendication 1 ou 2, dans lequel le système de génération d'hydrogène (1) comprend un générateur synchrone à excitation séparée et/ou un générateur synchrone à excitation permanente et/ou un générateur à courant continu à excitation séparée.

4. Système de génération d'hydrogène (1) selon la revendication 2 ou 3, dans lequel ledit au moins un conditionneur de puissance (4) est un redresseur actif ou passif.

5. Système de génération d'hydrogène (1) selon la revendication 4, dans lequel le conditionneur de puissance (4) est un redresseur actif comprenant au moins un semi-conducteur de puissance commutable, en particulier un thyristor.

6. Système de génération d'hydrogène (1) selon la revendication 4, dans lequel le conditionneur de puissance (4) est un redresseur passif comprenant une combinaison de diodes et/ou d'un hacheur réglable.

7. Système de génération d'hydrogène (1) selon l'une quelconque des revendications précédentes, comprenant en outre un raccordement de gazoduc (9) pour évacuer le gaz hydrogène produit.

8. Système de génération d'hydrogène (1) selon l'une quelconque des revendications précédentes, comprenant en outre un système de ravitaillement (10) par l'intermédiaire duquel des transporteurs de gaz hydrogène et/ou des consommateurs de gaz hydrogène peuvent s'approvisionner en gaz hydrogène produit.

9. Système de génération d'hydrogène (1) selon l'une quelconque des revendications précédentes, comprenant en outre une pile à combustible (11) pour générer une énergie électrique pour une alimentation en énergie auxiliaire (12) du système de génération d'hydrogène (1) au moyen d'hydrogène produit localement.

10. Système de génération d'hydrogène (1) selon l'une quelconque des revendications précédentes, comprenant en outre une alimentation en énergie auxiliaire (12) qui, en fonctionnement, est alimentée en énergie par le générateur au moyen d'un convertisseur.

11. Système de génération d'hydrogène (1) selon l'une quelconque des revendications précédentes, comprenant en outre un dispositif de traitement de l'eau (6) raccordé à ladite au moins une installation d'électrolyse (3) pour fournir de l'eau à ladite au moins une installation d'électrolyse (3).

12. Système de génération d'hydrogène (1) selon l'une quelconque des revendications précédentes, dans lequel au moins une éolienne (2) est une éolienne en mer.

13. Système de génération d'hydrogène (1) selon l'une quelconque des revendications précédentes, **caractérisé en ce que** ladite au moins une installation d'électrolyse (3), de préférence intégrée dans l'éolienne, présente une température de fonctionnement inférieure à 350 °C.
